# EUROPÄISCHE PATENTSCHRIFT

(11) **EP 3 464 933 B1**
(45) Veröffentlichungstag und Bekanntmachung des Hinweises auf die Patenterteilung: **01.04.2020**
(21) Anmeldenummer: 17724002.5
(22) Anmeldetag: 16.05.2017
(51) Int. Cl.: F16F 9/512

(54) **FREQUENZSELEKTIVER SCHWINGUNGSDÄMPFER FÜR KRAFTFAHRZEUGE MIT EINEM BYPASSSTEUERVENTIL**
FREQUENCY-SELECTIVE VIBRATION DAMPER FOR MOTOR VEHICLES HAVING A BYPASS CONTROL VALVE
AMORTISSEUR DE VIBRATIONS SÉLECTIF EN FRÉQUENCE POUR DES VÉHICULES À MOTEUR COMPRENANT UNE SOUPAPE DE COMMANDE DE DÉRIVATION

(30) Priorität: 23.05.2016 DE 102016208844
(43) Veröffentlichungstag der Anmeldung: 10.04.2019
(73) Patentinhaber: ThyssenKrupp Bilstein GmbH, 58256 Ennepetal (DE); thyssenkrupp AG, 45143 Essen (DE)
(72) Erfinder: SCHNEIDER, Jürgen, 58642 Iserlohn (DE); SCHMIDT, Klaus, 51519 Odenthal (DE); GÖTZ, Ole, 38112 Braunschweig (DE)
(74) Vertreter: thyssenkrupp Intellectual Property GmbH
(86) Internationale Anmeldenummer: PCT/EP2017/061710
(87) Internationale Veröffentlichungsnummer: WO 2017/202646

(56) Entgegenhaltungen:
- WO-A1-2015/185274
- WO-A1-2015/185279
- DE-A1- 1 455 823
- US-A1- 2015 053 518

## Beschreibung

Die vorliegende Erfindung betrifft einen frequenzselektiven Schwingungsdämpfer für Kraftfahrzeuge mit einem Bypasssteuerventil.

### Stand der Technik

Schwingungsdämpfer dieser Bauart sind im Stand der Technik in einer Vielzahl von Ausführungsformen bekannt.

Aus der DE 602 10 652 T2 ist ein Stoßdämpfer mit einem Kolbenabschnitt bekannt. In dem Kolbenabschnitt ist ein Ventilkörper hubbeweglich zwischen einer Komfortventilscheibe und einer Membran auch bezeichnet als ein Ventilkörper, angeordnet. Zur fluidischen Verbindung von zwei Arbeitsräumen im Dämpferrohr wird ein Hauptpfad, ein Komfortpfad und ein Bypasspfad angeführt, wobei der Bypasspfad fest definiert ist und keine Bypasssteuerung vorsieht. Die Steuerung eines Bypasses insbesondere mit einem Ventilscheibenpaket, welches gleichzeitig ein Komfortventil für einen Komfortpfad und ein Bypasssteuerventil zur Bypasssteuereung aufweist, ist nicht bekannt. Des Weiteren ist in einer Druckkammer zwingend ein Ablauf angeordnet, welcher stromab einer Ventilanordnung mündet.

Die WO 2015/185279 beschreibt einen Schwingungsdämpfer mit einer frequenzabhängigen Dämpfkraftkennlinie umfassend eine Dämpfventileinrichtung mit einer Steueranordnung für einen Schwingungsdämpfer. Die Steueranordnung umfasst einen Steuerkolben, wobei der Hub des Steuerkolbens über ein Federelement eine Vorspannung auf ein Federscheibenventil im Hauptstrom ausübt. Zur fluidischen Verbindung von zwei Arbeitsräumen im Dämpferrohr wird ein Hauptpfad und ein separater Steuerpfad angeführt für eine Steuerpfadfluidströmung, wobei der Steuerpfad über eine Ablaufverbindung fest definiert ist und keine Steuerung vorsieht.

Die Druckschrift WO2015/185274 bildet den naheliegendsten Stand der Technik und offenbart eine derartige Vorrichtung.

Problematisch bei dem Stand der Technik bekannten Ausführungsformen ist, dass bei niedrigen Dämpfergeschwindigkeiten der Volumenstrom oftmals nicht ausreicht, um ein im Hauptstrom angeordnetes Scheibenventilpaket zu öffnen, womit das gesamte Dämpfungsfluid über den Bypasspfad strömt. Des Weiteren ist meist keine Regelung, insbesondere keine unabhängige Regelung des Bypassstromes möglich. Zudem weisen im Stand der Technik bekannte Ausführungsformen keine platzsparende Bauweise auf.

Der vorliegenden Erfindung liegt daher die Aufgabe zugrunde, einen verbesserten Schwingungsdämpfer bereitzustellen, bei welchem die zuvor genannten Nachteile vermieden werden. Insbesondere soll mit diesem verbesserten Schwingungsdämpfer ein Schwingungsdämpfer mit kurzen Ansprechzeiten, insbesondere bei niederfrequenten Anregungen bei kleinen Amplituden, zur Verfügung gestellt werden. Des Weiteren soll eine kompakte Bauweise des verbesserten Schwingungsdämpfers ermöglicht werden.

### Offenbarung der Erfindung

Diese Aufgabe wird mit einem Schwingungsdämpfer nach Anspruch 1 gelöst.

Der erfindungsgemäße Schwingungsdämpfer weist gegenüber konventionellen Schwingungsdämpfer den Vorteil von kurzen Ansprechzeiten, insbesondere bei niederfrequenten Anregungen bei kleinen Amplituden, d.h. ohne Komfortverluste bzw. Verschlechterung bei anderen Fahrverhalten und/oder Situationen auf.

Der erfindungsgemäße Schwingungsdämpfer umfasst
- ein mindestens teilweise mit Dämpfungsflüssigkeit gefülltes Dämpferrohr, in dem eine Kolbenstange hin und her bewegbar ist, wobei mit der Kolbenstange ein Arbeitskolben mitbewegbar ist, durch den der Innenraum des Dämpferrohres in einen kolbenstangeseitigen Arbeitsraum und einen kolbenstangenfernen Arbeitsraum aufgeteilt ist,
- ein Dämpfungsmodul zur frequenzabhängigen Steuerung eines zwischen dem kolbenstangenseitigen Arbeitsraum (5) und dem kolbenstangenfernen Arbeitsraum ausgebildeten Komfortbypasses mit einem Komfortpfad, über den Dämpfungsflüssigkeit hydraulisch parallel zur Durchströmung des Arbeitskolbens (4) strömbar ist,
- einen in dem Dämpfungsmodul hubbeweglich aufgenommenen Steuerkolben, welcher kolbenstangenfern eine in dem Dämpfungsmodul angeordnete Druckkammer abgrenzt, wobei die Druckkammer mindestens einen Zulauf aufweist,
wobei das Dämpfungsmodul ein Dämpfungsmodulgehäuse mit einem kolbenstangeseitig angeordneten Gehäusedeckel und einem kolbenstangenfern angeordneten Gehäusetopf, den Steuerkolben und mindestens ein erstes Scheibenventilpaket umfasst, wobei das mindestens eine erstes Scheibenventilpaket in dem Komfortpfad mit dem Gehäusedeckel ein Komfortventil ausbildet und das mindestens eine erstes Scheibenventilpaket wenigstens ein Bypasssteuerventil aufweist, über welches unter Umgehung des Komfortventils Dämpfungsflüssigkeit über einen Bypasssteuerpfad hydraulisch parallel zur Durchströmung des Arbeitskolbens strömbar ist, wobei das Bypasssteuerventil über den Hub des Steuerkolbens gesteuert wird.

### Detaillierte Beschreibung der Erfindung

Im Rahmen der vorliegenden Erfindung wird unter einer Umgehung des Komfortventils ein von dem Komfortströmungspfad abweichender Strömungspfad verstanden, insbesondere zwischen dem kolbenstangeseitigen Arbeitsraum und dem einen kolbenstangenfernen Arbeitsraum.

Unter einem Zulauf wird im Rahmen der vorliegenden Erfindung eine Öffnung zur Durchströmung von Fluiden verstanden, insbesondere kann ein Zulauf als eine Hülse, eine Bohrung im Steuerkolben ausgeführt sein. Je nach Strömungsrichtung kann der Zulauf auch gleichzeitig als ein Ablauf ausgebildet sein.

In einer weiteren bevorzugten Ausführungsform der Erfindung ist der Zulauf derart angeordnet, dass der Zulauf in gerader Linie, insbesondere geradlinig, in die Druckkammer mündet.

Gemäß einer weiteren Ausführungsform der Erfindung ist der Zulauf derart ausgebildet, dass der Zulauf koaxial zu der Kolbenstange in die Druckkammer mündet.

Nach einer weiteren bevorzugten Ausführungsform der Erfindung weist die Druckkammer einen Ablauf auf, wobei der Ablauf auch der Zulauf in die Druckkammer ist, wobei der Ablauf stromaufwärts in die dem kolbenstangenseitigen Arbeitsraum zugewandten Seite des ersten Scheibenventilpaketes mündet. Beispielsweise kann der Ablauf als eine kolbenstangenseitig angeordnete, axial zentrierte Durchflusshülse als eine Strömungsverbindung ausgeführt sein.

In einer weiteren bevorzugten Ausführungsform der Erfindung ist der Zulauf derart ausgebildet, dass der Zulauf das erste Scheibenventilpaket in dem Dämpfungsmodulgehäuse zentriert, wobei der Zulauf eine Führung des ersten Scheibenventilpakets ausbildet.

Nach einer weiteren bevorzugten Ausführungsform der Erfindung weist der Gehäusedeckel zur Ausbildung des Komfortventils mit dem erste Scheibenventilpaket als Ventilsitz mindestens einen Komfortventilauflagekante auf.

Gemäß einer weiteren bevorzugten Ausführungsform der Erfindung ist der Steuerkolben mechanisch wirkentkoppelt von dem Arbeitskolben angeordnet.

Unter wirkentkoppelt wird im Rahmen der vorliegenden Erfindung verstanden, dass der Steuerkolben keine mechanisch wirksame Abhängigkeit zum Arbeitskolben aufweist, insbesondere ist der Hub des Steuerkolbens mechanisch nicht abhängig von dem Hub des Arbeitskolbens bzw. ist der Steuerkolben kraftentkoppelt von dem Arbeitskolben.

In einer weiteren bevorzugten Ausführungsform der Erfindung ist der Steuerkolben derart angeordnet, dass der Steuerkolben eine Vorspannungsänderung wenigstens auf das Komfortventil des ersten Scheibenventilpakets überträgt.

Im Rahmen der vorliegenden Erfindung wird unter einer Vorspannungsänderung eine dynamische Vorspannung verstanden.

Nach einer weiteren bevorzugten Ausführungsform der Erfindung weist der Steuerkolben mindestens eine randseitig angeordnete Steuerkolbenauflagekante auf, wobei das erste Scheibenventilpaket mit der dem Komfortventil abgewandten Seite auf der mindesten einen randseitig angeordneten Steuerkolbenauflagekante aufliegt. Hierbei bildet das erste Scheibenventilpaket mit der dem Komfortventil abgewandten Seite mit der mindesten einen randseitig angeordneten Steuerkolbenauflagekante einen Ventilsitz aus.

Gemäß einer weiteren bevorzugten Ausführungsform der Erfindung ist der Gehäusetopf derart angeordnet, dass der Gehäusetopf das erste Scheibenventilpaket gegenüber dem Gehäusedeckel verspannt und eine definierte Vorspannung wenigstens auf das Komfortventil des ersten Scheibenventilpakets ausbildet.

Unter einer definierten Vorspannung wird im Rahmen der vorliegenden Erfindung eine statische Spannung verstanden, welche nach einer wunschgemäßen Vorgabe eingestellt wird/wurde. Beispielsweise kann diese statische Spannung als Vorspannung mit einer Schraubverspannung, einer Klemmverspannung oder einer stoffschlüssigen Verbindung, insbesondere einer Schweißverbindung eingestellt werden.

Nach einer weiteren bevorzugten Ausführungsform der Erfindung ist die druckbeaufschlagbare Fläche des Steuerkolbens in der Druckkammer größer als die komfortventilseitig druckbeaufschlagbare Fläche in dem kolbenstangenseitigen Arbeitsraum des ersten Scheibenventilpakets.

In einer weiteren bevorzugten Ausführungsform der Erfindung ist das Dämpfungsmodul in der Zugstufe und/oder der Druckstufe des Schwingungsdämpfers angeordnet.

Gemäß einer weiteren bevorzugten Ausführungsform der Erfindung umfasst das erste Scheibenventilpaket mindestens eine Bypassscheibe mit mindestens einer Bypassscheibenöffnung, mindestens eine Abstandsscheibe und eine Komfortscheibe.

In einer weiteren Ausführungsform der Erfindung ist der Ablauf an dem Gehäusetopf angeordnet, wobei der Ablauf in den kolbenstangenfernen Arbeitsraum mündet.

Nach einer weiteren bevorzugten Ausführungsform der Erfindung weist der Steuerkolben mindestens eine randseitig angeordnete Steuerkolbenauflagekante auf, wobei das erste Scheibenventilpaket mit der dem Komfortventil abgewandten Seite auf der mindesten einen randseitig angeordneten Steuerkolbenauflagekante aufliegt.

Nach einer weiteren bevorzugten Ausführungsform der Erfindung weist das Dämpfungsmodul ein am Zulauf der Druckkammer angeordnetes Rückschlagventil auf.

Im Rahmen der vorliegenden Erfindung wird unter einem Rückschlagventil ein insbesondere federbelastetes Rückschlagventil verstanden, wobei ein Schließelement, insbesondere eine Federscheibe in einer Fließrichtung eine definierte kleine Durchflussöffnung bereitstellt und in der andren Fließrichtung eine vielfach größere Durchflussöffnung bereitstellt.. Beispielsweise kann das Rückschlagventil auf der der Kolbenstange zugewandten Seite des Zulaufs und/oder der der Kolbenstange abgewandten Seite des Zulaufs angeordnet sein.

Gemäß einer weiteren bevorzugten Ausführungsform der Erfindung liegt die Bypassscheibe stromabwärts an der dem kolbenstangenfernen Arbeitsraum zugewandten Seite der Bypassscheibe auf der Steuerkolbenauflagekante in einem vorgespannten Zustand auf und ist die mindestens eine Abstandsscheibe derart geometrisch ausgebildet, dass die Abstandsscheibe die Bypassscheibenöffnung nicht überdeckt und die mindestens eine Abstandsscheibe die Bypassscheibe von der stromaufwärts auf der dem kolbenstangennahen Arbeitsraum zugewandten Seite angeordneten Komfortscheibe beabstandet.

In einer weiteren bevorzugten Ausführungsform der Erfindung weist die Komfortscheibe die mindestens eine Bypasszulauföffnung auf und die Abstandsscheibe ist derart geometrisch ausgebildet, dass die Abstandsscheibe die mindestens eine Bypasszulauföffnung nicht überdeckt.

Nach einer weiteren bevorzugten Ausführungsform der Erfindung ist die mindestens eine Bypasszulauföffnung derart geometrisch ausgebildet, dass die Bypasszulauföffnung auf der dem Zulauf zugewandten Seite des ersten Scheibenventilpakets durch das erste Scheibenventilpaket verläuft von der dem kolbenstangennahen Arbeitsraum zugewandten Seite der Komfortscheibe zu der dem kolbenstangenfernen Arbeitsraum zugewandten Seite der Bypassscheibe.

Gemäß einer weiteren bevorzugten Ausführungsform der Erfindung weist der Steuerkolben die mindestens eine Bypasszulauföffnung auf und das erste Scheibenventilpaket weist zusätzlich eine Bypass-Abstandsscheibe auf, wobei die Bypass-Abstandsscheibe in Richtung zu der Außenseite des ersten Scheibenventilpakets nach der Bypassscheibe beweglich zwischen der Bypassscheibe und dem Steuerkolben angeordnet ist und die Bypass-Abstandsscheibe ist derart geometrisch ausgebildet, dass die Bypass-Abstandsscheibe die mindestens eine Bypasszulauföffnung überdeckt und die mindestens eine Bypasszulauföffnung die Bypassscheibenöffnung der Bypassscheibe zumindest nicht vollständig überdeckt.

Unter zumindest nicht vollständig überdeckt wird im Rahmen der vorliegenden Erfindung verstanden, dass gewährleistet ist, dass die Bypassscheibenöffnung der Bypassscheibe nicht vollständig abgedeckt ist und in jedem Fall eine teilweise Durchströmung der Bypassscheibenöffnung möglich ist.

### Kurze Beschreibung der Zeichnungen

Der erfindungsgemäße Schwingungsdämpfer wird anhand der Zeichnungen erläutert.
- Fig. 1: zeigt schematisch einen Längsschnitt im Bereich eines Arbeitskolbens und eines Dämpfungsmoduls durch einen Schwingungsdämpfer gemäß einer Ausführungsform der Erfindung,
- Fig. 2: zeigt schematisch einen Längsschnitt im Bereich eines Dämpfungsmoduls durch einen Steuerkolben und ein erstes Scheibenventilpaket gemäß einer weiteren Ausführungsform des Dämpfungsmoduls der Erfindung,
- Fig. 3: zeigt schematisch einen Längsschnitt im Bereich des Dämpfungsmoduls durch einen Steuerkolben und ein erstes Scheibenventilpaket gemäß einer weiteren Ausführungsform des Dämpfungsmoduls der Erfindung,
- Fig. 4: zeigt schematisch einen Längsschnitt im Bereich des Arbeitskolbens nach Fig. 1 und im Bereich eines Dämpfungsmoduls nach Fig. 3.

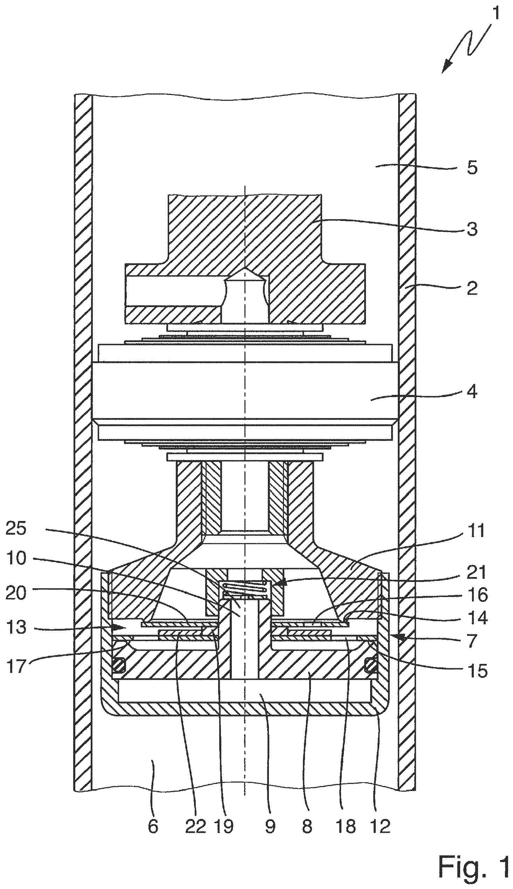

In der Fig. 1 ist ein Längsschnitt im Bereich eines Arbeitskolbens 4 und eines Dämpfungsmoduls 7 durch einen Schwingungsdämpfer 1 mit einem Dämpferrohr 2, einer Kolbenstange 3 und dem an der Kolbenstange 3 angeordneten Arbeitskolben 4 und des Dämpfungsmoduls 7 gemäß einer Ausführungsform der Erfindung dargestellt. Der Arbeitskolben 4 unterteilt den Innenraum des Dämpferrohres 2 in einen kolbenstangeseitigen Arbeitsraum 5 und einen kolbenstangenfernen Arbeitsraum 6. Während eines Zug- oder Druckstufenvorgangs kann ein Hauptstrom aus dem kolbenstangenseitigen Arbeitsraum 5 den Arbeitskolben 4 durchströmen, um in den kolbenstangenfernen Arbeitsraum 6 zu gelangen. Ein Komfortstrom kann über eine Öffnung in der Kolbenstange 3 in das Dämpfungsmodul 7 strömen. Das Dämpfungsmodul 7 umfasst ein Dämpfungsmodulgehäuse mit einem kolbenstangenseitig angeordneten Gehäusedeckel 11, einen kolbenstangenfern angeordneten Gehäusetopf 12, einen Steuerkolben 8 und mindestens ein erstes Scheibenventilpaket 13. Der Gehäusedeckel 11 weist eine Komfortventilauflagekannte 14 auf. Der Steuerkolben 8 weist eine Steuerkolbenauflagekannte 15 auf und ist hubbeweglich und kolbenstangenfern angeordnet und grenzt eine in dem Dämpfungsmodul 7 angeordnete Druckkammer 9 ab. Die Druckkammer 9 weist einen Zulauf 10 auf. Der Zulauf 10 läuft durch den Steuerkolben 8 und ist beispielhaft als eine Hülse dargestellt. In der dargestellten Ausführungsform fungiert der Zulauf 10 auch als ein Ablauf 25. Das erste Scheibenventilpaket 13 umfasst eine Bypassscheibe 17 mit einer Bypassscheibenöffnung (18), eine Abstandsscheibe 19 und eine Komfortscheibe 20 mit einer Bypasszulauföffnung 16. Die Abstandsscheibe 19 ist zwischen der Komfortscheibe 20 und der Bypassscheibe 17 angeordnet und beanstandet beide Scheiben, wobei die Abstandsscheibe 19 die Bypasszulauföffnung 16 der Komfortscheibe 20 sowie die Bypassscheibenöffnung 18 der Bypassscheibe 17 nicht überdeckt. Koaxial zu der Abstandsscheibe 19 ist eine Bypass-Abstandsscheibe 22 angeordnet, wobei die Bypass-Abstandsscheibe 22 die Bypassscheibenöffnung 18 der Bypassscheibe 17 zumindest nicht vollständig überdeckt. Das erste Scheibenventilpaket 13 ist vorgespannt zwischen der Komfortventilauflagekannte 14 und der Steuerkolbenauflagekannte 15 angeordnet. Das erste Scheibenventilpaket 13 wird durch die als Hülse an dem Steuerkolben 8 ausgebildeten Zulauf 10 zentriert. In dem Dämpfungsmodul 7 kann zusätzlich ein Rückschlagventil 21 angeordnet sein. Das Rückschlagventil 21 beschleunigt eine Entleerung der Dämpfungskammer 9 über den Ablauf 25.

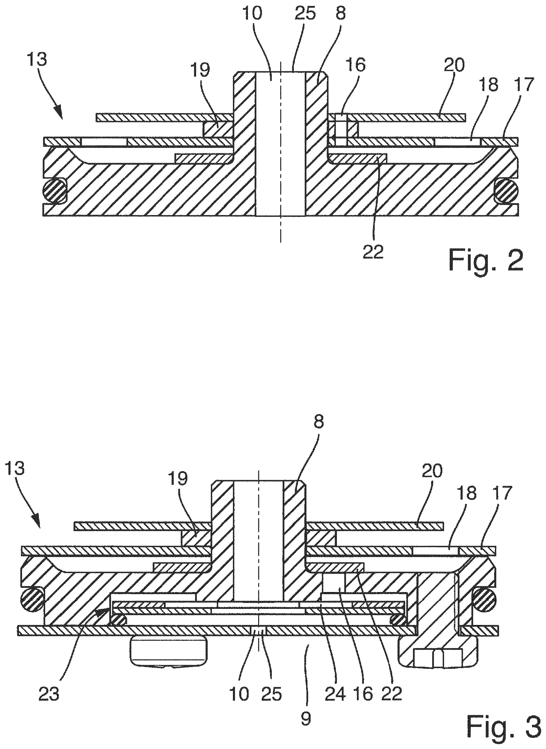

In der Fig. 2 ist ein Längsschnitt im Bereich des Dämpfungsmoduls 7 durch den Steuerkolben 8 und das erste Scheibenventilpaket 13 gemäß einer weiteren Ausführungsform des Dämpfungsmoduls der Erfindung dargestellt. Im Unterschied zu Figur 1 verläuft in dem ersten Scheibenventilpaket 13 des Dämpfungsmoduls 7 die Bypasszulauföffnung 16 durch das erste Scheibenventilpaket 13 von der dem kolbenstangennahen Arbeitsraum zugewandten Seite der Komfortscheibe 20 zu der dem kolbenstangenfernen Arbeitsraum zugewandten Seite der Bypassscheibe 17. Das erste Scheibenventilpaket 13 weist zusätzlich eine Bypass-Abstandsscheibe 22 auf, wobei die Bypass-Abstandsscheibe 22 in Richtung zu der Außenseite des ersten Scheibenventilpakets 13 nach der Bypassscheibe 17 angeordnet ist, wobei die Bypass-Abstandsscheibe 22 die Bypassscheibenöffnung 18 der Bypassscheibe 17 zumindest nicht vollständig überdeckt. Das erste Scheibenventilpaket 13 wird auf der kolbenstangennahen Seite durch den Zulauf 10 zentriert.

In der Fig. 3 ist ein Längsschnitt im Bereich des Dämpfungsmoduls 7 durch den Steuerkolben 8 und das erste Scheibenventilpaket 13 gemäß einer weiteren Ausführungsform des Dämpfungsmoduls 7 der Erfindung dargestellt. Das erste Scheibenventilpaket 13 weist zusätzlich eine Bypass-Abstandsscheibe 22 auf. Im Unterschied zu den Fig. 1 und/oder Fig. 2 weist der Steuerkolben 8 die mindestens eine Bypasszulauföffnung 16 auf. Die Bypass-Abstandsscheibe 22 ist in Richtung zu der Außenseite des ersten Scheibenventilpakets 13 nach der Bypassscheibe 17 beweglich zwischen der Bypassscheibe 17 und dem Steuerkolben 8 angeordnet. Zudem überdeckt die Bypass-Abstandsscheibe 22 die Bypassscheibenöffnung 18 der Bypassscheibe 17 zumindest nicht vollständig. Des Weiteren ist auf der der Druckkammer 9 zugewandten Seite des Steuerkolbens 8 an dem Steuerkolben 8 ein weiteres Scheibenventilpaket 23 angeordnet. Das weitere Scheibenventilpaket 23 weist eine Durchflussöffnung 24 zu der mindestens einen Bypasszulauföffnung 16 auf. In der dargestellten Ausführungsform fungiert der Zulauf 10 auch als ein Ablauf 25.

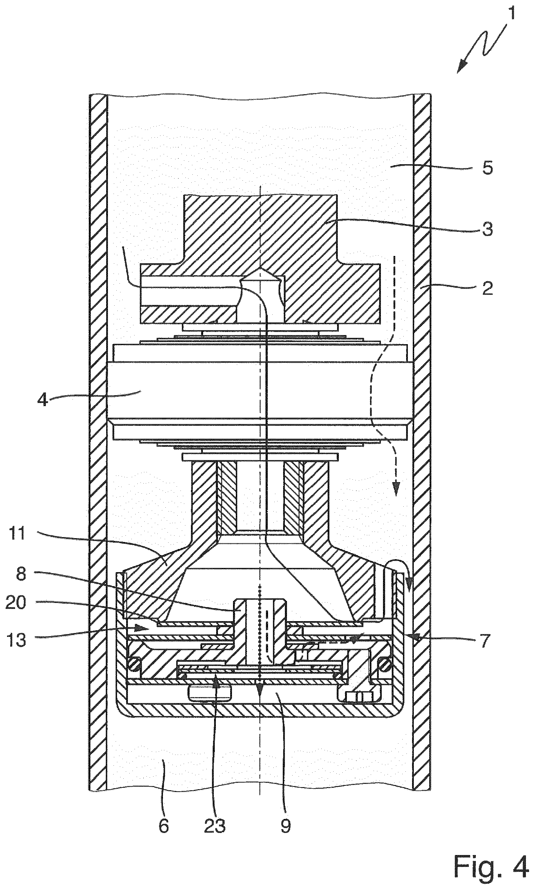

In der Figur 4 ist ein Längsschnitt im Bereich des Arbeitskolbens nach Fig. 1 und im Bereich des Dämpfungsmoduls nach Fig. 3 gemäß einer weiteren Ausführungsform der Erfindung dargestellt. Die Durchströmbarkeit des Arbeitskolbens 4 wird mit einem mit langen Strichen dargestellten unterbrochenen Strömungspfeil dargestellt und als Hauptpfad bezeichnet. Der Hauptpfad stellt eine fluidische Verbindung über den Arbeitskolben 4 zwischen dem kolbenstangeseitigen Arbeitsraum 5 und dem kolbenstangenfernen Arbeitsraum 6 her. Eine weitere fluidische Verbindung führt an dem Arbeitskolben 4 vorbei und ist als ein Komfortpfad mit einem durchgezogenen Strömungspfeil dargestellt. Der Komfortpfad stellt eine fluidische Verbindung durch die Kolbenstange 3 zwischen dem kolbenstangeseitigen Arbeitsraum 5 und dem kolbenstangenfernen Arbeitsraum 6 her. Der Austritt des Komfortpfades in den kolbenstangenfernen Arbeitsraum 6 erfolgt durch Abheben der Komfortscheibe 20 von der Komfortventilauflagekante 14. Als ein weiterer fluidischer Strömungspfad ist ein Steuerpfad mit einem gepunkteten Strömungspfeil dargestellt. Der Steuerpfad führt über den Zulauf 10 des Steuerkolbens 8 in die Druckkammer 9. Die fluidische Strömung des Steuerpfades steuert die Position des Steuerkolbens 9 innerhalb des Dämpfungsmoduls 7 und beeinflusst die Kraftwirkung auf die Komfortscheibe 20 des ersten Scheibenventilpaketes 13, wobei die die Komfortscheibe 20 entweder auf der Komfortventilauflagekante 14 aufliegt oder diese frei gibt zur Durchströmung des Komfortpfades in den kolbenstangenfernen Arbeitsraum 6. Als ein weiterer fluidischer Strömungspfad ist ein Bypasssteuerpfad mit einem mit kurzen Strichen dargestellten unterbrochenen Strömungspfeil dargestellt und als Steuerbypasspfad bezeichnet. Der Steuerbypasspfad umgeht das Ventil zwischen der Komfortscheibe 20 und der Komfortventilauflagekante 14 und stellt eine strömungstechnische Verbindung zwischen dem kolbenstangeseitigen Arbeitsraum 5 und dem kolbenstangenfernen Arbeitsraum 6 dar. Eine Steuermöglichkeit des Steuerbypassstromes ist über das dargestellte zweite Scheibenventilpaket 23 und/oder der Bewegung des Steuerkolbens 8 möglich.

### Gewerbliche Anwendbarkeit

Schwingungsdämpfer für Fahrzeuge der vorbeschriebenen Art werden in der Produktion von Fahrzeugen, insbesondere von Fahrwerken von Kraftfahrzeuge eingesetzt.

### Bezugszeichenliste

1 = Schwingungsdämpfer
2 = Dämpferrohr
3 = Kolbenstange
4 = Arbeitskolben
5 = kolbenstangenseitiger Arbeitsraum
6 = Kolbenstangenferner Arbeitsraum
7 = Dämpfungsmodul
8 = Steuerkolben
9 = Druckkammer
10 = Zulauf
11 = Gehäusedeckel
12 = Gehäusetopf
13 = erstes Scheibenventilpaket
14 = Komfortventilauflagekante
15 = Steuerkolbenauflagekante
16 = Bypasszulauföffnung
17 = Bypassscheibe
18 = Bypassscheibenöffnung
19 = Abstandsscheibe
20 = Komfortscheibe
21 = Rückschlagventil
22 = Bypass-Abstandsscheibe
23 = weiteres Scheibenventilpaket
24 = Durchflussöffnung
25 = Ablauf
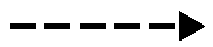 = Hauptpfad
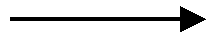 = Komfortpfad
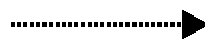 = Steuerpfad
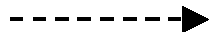 = Steuerbypasspfad

## Patentansprüche

1. Schwingungsdämpfer (1) umfassend
- ein mindestens teilweise mit Dämpfungsflüssigkeit gefülltes Dämpferrohr (2), in dem eine Kolbenstange (3) hin und her bewegbar ist, wobei mit der Kolbenstange (3) ein Arbeitskolben (4) mitbewegbar ist, durch den der Innenraum des Dämpferrohres in einen kolbenstangeseitigen Arbeitsraum (5) und einen kolbenstangenfernen Arbeitsraum (6) aufgeteilt ist,
- ein Dämpfungsmodul (7) zur frequenzabhängigen Steuerung eines zwischen dem kolbenstangenseitigen Arbeitsraum (5) und dem kolbenstangenfernen Arbeitsraum (6) ausgebildeten Komfortbypasses mit einem Komfortpfad, über den Dämpfungsflüssigkeit hydraulisch parallel zur Durchströmung des Arbeitskolbens (4) strömbar ist,
- einen in dem Dämpfungsmodul (7) hubbeweglich aufgenommenen Steuerkolben (8), welcher kolbenstangenfern eine in dem Dämpfungsmodul (7) angeordnete Druckkammer (9) abgrenzt, wobei die Druckkammer (9) mindestens einen Zulauf (10) aufweist,
**dadurch gekennzeichnet, dass**
das Dämpfungsmodul (7) ein Dämpfungsmodulgehäuse mit einem kolbenstangeseitig angeordneten Gehäusedeckel (11) und einem kolbenstangenfern angeordneten Gehäusetopf (12), den Steuerkolben (8) und mindestens ein erstes Scheibenventilpaket (13) umfasst, wobei das mindestens eine erstes Scheibenventilpaket (13) in dem Komfortpfad mit dem Gehäusedeckel (11) ein Komfortventil ausbildet und das mindestens eine erstes Scheibenventilpaket (13) wenigstens ein Bypasssteuerventil aufweist, über welches unter Umgehung des Komfortventils Dämpfungsflüssigkeit über einen Bypasssteuerpfad hydraulisch parallel zur Durchströmung des Arbeitskolbens (4) strömbar ist, wobei das Bypasssteuerventil über den Hub des Steuerkolbens (8) gesteuert wird.

2. Schwingungsdämpfer (1) nach dem vorherigen Anspruch 1, **dadurch gekennzeichnet, dass** die Druckkammer (9) einen Ablauf (25) aufweist, wobei der Ablauf (25) auch der Zulauf (10) in die Druckkammer (9) ist, wobei der Ablauf (25) stromaufwärts in die dem kolbenstangenseitigen Arbeitsraum zugewandten Seite des Scheibenventilpaketes (13) mündet.

3. Schwingungsdämpfer (1) nach einem der vorherigen Ansprüche 1 bis 2, **dadurch gekennzeichnet, dass** der Zulauf (10) derart ausgebildet ist, dass der Zulauf (10) das erstes Scheibenventilpaket (13) in dem Dämpfungsmodulgehäuse zentriert, wobei der Zulauf (10) eine Führung des Ersten Scheibenventilpakets (13) ausbildet.

4. Schwingungsdämpfer (1) nach einem der vorherigen Ansprüche 1 bis 3, **dadurch gekennzeichnet, dass** der Gehäusedeckel (11) zur Ausbildung des Komfortventils mit dem erstes Scheibenventilpaket (13) als Ventilsitz mindestens eine Komfortventilauflagekante (14) aufweist.

5. Schwingungsdämpfer (1) nach einem der vorherigen Ansprüche 1 bis 4, **dadurch gekennzeichnet, dass** der Steuerkolben (8) mechanisch wirkentkoppelt von dem Arbeitskolben (4) angeordnet ist.

6. Schwingungsdämpfer (1) nach einem der vorherigen Ansprüche 1 bis 5, **dadurch gekennzeichnet, dass** der Steuerkolben (8) derart angeordnet ist, dass der Steuerkolben (8) eine Vorspannungsänderung wenigstens auf das Komfortventil des ersten Scheibenventilpakets (13) ausbildet.

7. Schwingungsdämpfer (1) nach einem der vorherigen Ansprüche 1 bis 6, **dadurch gekennzeichnet, dass** der Steuerkolben (8) mindestens eine randseitig angeordnete Steuerkolbenauflagekante (15) aufweist, wobei das erstes Scheibenventilpaket (13) mit der dem Komfortventil abgewandten Seite auf der mindesten einen randseitig angeordneten Steuerkolbenauflagekante (15) aufliegt.

8. Schwingungsdämpfer (1) nach einem der vorherigen Ansprüche 1 bis 7, **dadurch gekennzeichnet, dass** der Gehäusetopf (12) derart angeordnet ist, dass der Gehäusetopf (12) das erste Scheibenventilpaket (13) gegenüber dem Gehäusedeckel (11) verspannt und eine definierte Vorspannung wenigstens auf das Komfortventil des ersten Scheibenventilpakets (13) ausbildet.

9. Schwingungsdämpfer (1) nach einem der vorherigen Ansprüche 1 bis 8, **dadurch gekennzeichnet, dass** die druckbeaufschlagbare Fläche des Steuerkolbens (8) in der Druckkammer (9) größer ist als die komfortventilseitig druckbeaufschlagbare Fläche in dem kolbenstangenseitigen Arbeitsraum des ersten Scheibenventilpakets (13).

10. Schwingungsdämpfer (1) nach einem der vorherigen Ansprüche 1 bis 9, **dadurch gekennzeichnet, dass** das Dämpfungsmodul (7) in der Zugstufe und/oder der Druckstufe des Schwingungsdämpfers (1) angeordnet ist.

## Claims

1. Vibration damper (1) comprising
- a damper tube (2) which is at least partially filled with damping fluid and in which a piston rod (3) is movable back and forth, wherein a working piston (4) is movable jointly with the piston rod (3), by means of which working piston the interior space of the damper tube is divided into a piston-rod-side working space (5) and a piston-rod-remote working space (6),
- a damping module (7) for the frequency-dependent control of a comfort bypass which is formed between the piston-rod-side working space (5) and the piston-rod-remote working space (6) and which comprises a comfort path via which damping fluid can be caused to flow hydraulically in parallel with respect to the flow through the working piston (4),
- a control piston (8) which is received, such that it can perform stroke movements, in the damping module (7) and which, remote from the piston rod, delimits a pressure chamber (9) arranged in the damping module (7), wherein the pressure chamber (9) comprises at least one inlet (10),
**characterized in that**
the damping module (7) comprises a damping module housing, with a housing cover (11) arranged at the piston rod side and with a housing pot (12) arranged remote from the piston rod, comprises the control piston (8) and comprises at least one first disk valve assembly (13), wherein the at least one first disk valve assembly (13), in the comfort path with the housing cover (11), forms a comfort valve, and the at least one first disk valve assembly (13) comprises at least one bypass control valve via which, bypassing the comfort valve, damping fluid can be caused to flow via a bypass control path hydraulically in parallel with respect to the flow through the working piston (4), wherein the bypass control valve is controlled by means of the stroke of the control piston (8).

2. Vibration damper (1) according to the preceding Claim 1, **characterized in that** the pressure chamber (9) comprises an outlet (25), wherein the outlet (25) is also the inlet (10) into the pressure chamber (9), wherein the outlet (25) opens, upstream, into that side of the disk valve assembly (13) which faces toward the piston-rod-side working space.

3. Vibration damper (1) according to either of the preceding Claims 1 and 2, **characterized in that** the inlet (10) is designed such that the inlet (10) centres the first disk valve assembly (13) in the damping module housing, wherein the inlet (10) forms a guide of the first disk valve assembly (13).

4. Vibration damper (1) according to one of the preceding Claims 1 to 3, **characterized in that** the housing cover (11), to form the comfort valve with the first disk valve assembly (13), comprises at least one comfort valve support edge (14) as valve seat.

5. Vibration damper (1) according to one of the preceding Claims 1 to 4, **characterized in that** the control piston (8) is arranged so as to be mechanically decoupled in terms of action from the working piston (4).

6. Vibration damper (1) according to one of the preceding Claims 1 to 5, **characterized in that** the control piston (8) is arranged such that the control piston (8) effects a change in preload at least on the comfort valve of the first disk valve assembly (13).

7. Vibration damper (1) according to one of the preceding Claims 1 to 6, **characterized in that** the control piston (8) comprises at least one control piston support edge (15) arranged at the edge, wherein the first disk valve assembly (13) lies with the side averted from the comfort valve on the at least one control piston support edge (15) arranged at the edge.

8. Vibration damper (1) according to one of the preceding Claims 1 to 7, **characterized in that** the housing pot (12) is arranged such that the housing pot (12) braces the first disk valve assembly (13) relative to the housing cover (11) and effects a defined preload at least on the comfort valve of the first disk valve assembly (13).

9. Vibration damper (1) according to one of the preceding Claims 1 to 8, **characterized in that** that surface of the control piston (8) which can be subjected to pressure in the pressure chamber (9) is larger than the surface which can be subjected to pressure at the comfort valve side in the piston-rod-side working space of the first disk valve assembly (13).

10. Vibration damper (1) according to one of the preceding Claims 1 to 9, **characterized in that** the damping module (7) is arranged in the rebound stage and/or the compression stage of the vibration damper (1).

## Revendications

1. Amortisseur de vibrations (1) comportant
- un tube d'amortisseur (2) rempli au moins partiellement de liquide d'amortissement, tube dans lequel une tige de piston (3) peut être animée d'un mouvement de va-et-vient, un piston de travail (4) pouvant être déplacé avec la tige de piston (3), piston de travail au moyen duquel l'espace intérieur du tube d'amortisseur est divisé en un espace de travail (5) côté tige de piston et un espace de travail (6) éloigné de la tige de piston,
- un module d'amortissement (7) pour la commande, en fonction de la fréquence, d'une dérivation de confort formée entre l'espace de travail (5) côté tige de piston et l'espace de travail (6) éloigné de la tige de piston, comprenant un trajet de confort par le biais duquel du liquide d'amortissement peut s'écouler hydrauliquement parallèlement à l'écoulement à travers le piston de travail (4),
- un piston de commande (8) reçu de manière à effectuer un mouvement de course dans le module d'amortissement (7), lequel piston de commande délimite, de manière éloignée de la tige de piston, une chambre de pression (9) disposée dans le module d'amortissement (7), la chambre de pression (9) comprenant au moins une entrée (10),
**caractérisé en ce que**
le module d'amortissement (7) comporte un boîtier de module d'amortissement doté d'un couvercle de boîtier (11) disposé du côté de la tige de piston et d'un pot de boîtier (12) disposé de manière éloignée de la tige de piston, le piston de commande (8) et au moins un premier groupe de soupapes à disques (13), ledit au moins un premier groupe de soupapes à disques (13) formant une soupape de confort avec le couvercle de boîtier (11) dans le trajet de confort et ledit au moins un premier groupe de soupapes à disques (13) comprenant au moins une soupape de commande de dérivation, du liquide d'amortissement pouvant s'écouler hydrauliquement parallèlement à l'écoulement à travers le piston de travail (4) sur un trajet de commande de dérivation par le biais de ladite au moins une soupape de commande de dérivation en contournant la soupape de confort, la soupape de commande de dérivation étant commandée par le biais de la course du piston de commande (8).

2. Amortisseur de vibrations (1) selon la revendication précédente 1, **caractérisé en ce que** la chambre de pression (9) comprend une sortie (25), la sortie (25) étant également l'entrée (10) dans la chambre de pression (9), la sortie (25) débouchant en amont dans le côté du groupe de soupapes à disques (13) tourné vers l'espace de travail côté tige de piston.

3. Amortisseur de vibrations (1) selon l'une des revendications précédentes 1 et 2, **caractérisé en ce que** l'entrée (10) est réalisée de telle sorte que l'entrée (10) centre le premier groupe de soupapes à disques (13) dans le boîtier de module d'amortissement, l'entrée (10) constituant un guide pour le premier groupe de soupapes à disques (13).

4. Amortisseur de vibrations (1) selon l'une des revendications précédentes 1 à 3, **caractérisé en ce que** le couvercle de boîtier (11), pour former la soupape de confort avec le premier groupe de soupapes à disques (13), comprend au moins une arête de support de soupape de confort (14) en tant que siège de soupape.

5. Amortisseur de vibrations (1) selon l'une quelconque des revendications précédentes 1 à 4, **caractérisé en ce que** le piston de commande (8) est disposé de manière désaccouplée fonctionnellement mécaniquement du piston de travail (4).

6. Amortisseur de vibrations (1) selon l'une quelconque des revendications précédentes 1 à 5, **caractérisé en ce que** le piston de commande (8) est disposé de telle sorte que le piston de commande (8) produise une variation de précontrainte au moins sur la soupape de confort du premier groupe de soupapes à disques (13).

7. Amortisseur de vibrations (1) selon l'une des revendications précédentes 1 à 6, **caractérisé en ce que** le piston de commande (8) comprend au moins une arête de support de piston de commande (15) disposée du côté du bord, le premier groupe de soupapes à disques (13) reposant, par le côté opposé à la soupape de confort, sur ladite au moins une arête de support de piston de commande (15) disposée du côté du bord.

8. Amortisseur de vibrations (1) selon l'une quelconque des revendications précédentes 1 à 7, **caractérisé en ce que** le pot de boîtier (12) est disposé de telle sorte que le pot de boîtier (12) précontraigne le premier groupe de soupapes à disques (13) par rapport au couvercle de boîtier (11) et produise une précontrainte définie au moins sur la soupape de confort du premier groupe de soupapes à disques (13).

9. Amortisseur de vibrations (1) selon l'une quelconque des revendications précédentes 1 à 8, **caractérisé en ce que** la surface du piston de commande (8) pouvant être sollicitée en pression dans la chambre de pression (9) est plus grande que la surface pouvant être sollicitée en pression du côté de la soupape de confort dans l'espace de travail du côté de la tige de piston du premier groupe de soupapes à disques (13).

10. Amortisseur de vibrations (1) selon l'une quelconque des revendications précédentes 1 à 9, **caractérisé en ce que** le module d'amortissement (7) est disposé dans l'étage de traction et/ou l'étage de pression de l'amortisseur de vibrations (1).
